# FASCICULE DE BREVET EUROPEEN

(11) **EP 0 629 957 B1**
(45) Date de publication et mention de la délivrance du brevet: **23.09.1998**
(21) Numéro de dépôt: 94460018.8
(22) Date de dépôt: 17.06.1994
(51) Int. Cl.: G06F 13/40, G06F 1/22

(54) **Système à bus comportant un nombre réduit de lignes et son utilisation**
Bussystem mit verringerter Anzahl von Leitungen und Anwendung
Bus system with a reduced number of lines and its use

(30) Priorité: 21.06.1993 FR 9307728
(43) Date de publication de la demande: 21.12.1994
(73) Titulaire: SGS-THOMSON MICROELECTRONICS S.A., 94250 Gentilly (FR)
(72) Inventeur: Bahout, Yvon, F-56108 Lorient (FR); Tailliet, François, F-56108 Lorient (FR)
(74) Mandataire: Fournier, Michel Robert Marie

(56) Documents cités:
- WO-A-92/11678
- US-A- 4 901 217
- ELEKTOR ELECTRONICS vol. 18, no. 197 , Février 1992 , CANTERBURY GB pages 36 - 40 XP290167 J.RUFFEL 'I2C Interface for PCs'
- PATENT ABSTRACTS OF JAPAN vol. 6, no. 38 (P-105)(916) 9 Mars 1982 & JP-A-56 157 516 (TOKYO SHIBAURA DENKI K.K.) 4 Décembre 1981

## Description

L'invention concerne les systèmes électroniques composés d'une pluralité d'unités communiquant entre elles par l'intermédiaire de liaisons de type bus.

Classiquement, les bus sont constitués d'une pluralité de lignes spécialisées. Certaines de ces lignes servent à véhiculer des signaux dits fonctionnels tels que les signaux de commande, d'adresse, de donnée, ainsi que les signaux d'horloge dans le cas des systèmes synchrones. D'autres lignes du bus sont affectées à l'alimentation électrique des circuits qui composent les unités du système et ces lignes sont reliées à un générateur de tensions d'alimentation. Ainsi, un bus comportera donc au moins deux lignes d'alimentation dont une définit généralement la masse du système, les autres lignes d'alimentation étant portées à des potentiels définis en fonction des besoins de la technologie utilisée.

Ainsi par exemple les bus conformes à la norme I²C sont constitués de quatre lignes :
- une ligne "SDA" pour la transmission bidirectionnelle en série de signaux de commande, d'adresse et de donnée,
- une ligne "SCL" pour transmettre un signal d'horloge,
- une ligne "Vss" affectée à la masse et
- une ligne "Vcc" prévue pour recevoir un potentiel d'alimentation positif.

Ce bus standard I²C est utilisé par exemple pour réaliser des systèmes appliqués à l'électronique grand public ou à l'électronique automobile. Typiquement de tels systèmes sont composés d'un sous-système central à microprocesseur qui commande par l'intermédiaire du bus des unités périphériques. Comme exemple d'unités périphériques, on peut citer les mémoires programmables effaçables électriquement du type EEPROM qui permettent de sauvegarder des données en l'absence de tensions d'alimentation persistantes. Ces mémoires sont en particulier utilisées en électronique automobile pour mettre en oeuvre des fonctions décentralisées nécessitant une mémorisation non-volatile de données. C'est le cas par exemple des systèmes d'anti-blocage des roues ou pour commander des systèmes de sécurité ("AIR BAG") ou pour divers dispositifs électriques de réglage (auto-radio, positionnement des sièges...).

Comme autres exemples d'utilisation des bus I²C, on peut citer également les systèmes utilisant des lecteurs de cartes à microprocesseur (cartes à puce).

Bien entendu, le choix d'un standard de bus pour un système impose l'interface des unités qui le compose. Cela a également pour conséquence d'imposer le type de connecteur utilisable qui doit possèder un nombre de bornes au moins égal au nombre de lignes du bus. De même, les circuits intégrés spécialement conçus pour être compatibles avec le standard choisi devront aussi être munis du même nombre de bornes. Or, une part importante du coût de fabrication d'un système est due au coût des connecteurs utilisés et ce coût est directement lié au nombre de leurs bornes. Il est donc préférable que ce nombre soit aussi petit que possible. Ainsi, en prévoyant une seule liaison série pour véhiculer à la fois les commandes, les adresses et les données, la norme I²C permet de limiter à quatre le nombre de lignes du bus.

Un autre avantage d'un faible nombre de lignes de bus est une meilleure fiabilité du système car en réduisant le nombre de bornes des connecteurs, on réduit proportionnellement les risques de défaillances des contacts électriques correspondants. De même, une réduction du nombre de lignes entraîne une réduction du coût des câblages qui peut être important dans le cas par exemple des applications automobiles.

Un autre cas où une réduction du nombre de lignes est intéressante est celui où l'on cherche à libérer une borne d'un connecteur pour pouvoir accéder à une borne supplémentaire du circuit intégré prévue pour être insérée dans ce connecteur. Cette borne supplémentaire sera par exemple prévue pour brancher une ligne de test pouvant servir lors de la mise au point ou à l'installation du système.

Aussi l'invention a pour but de rechercher des solutions permettant de réduire au maximum le nombre de lignes des bus de communication tout en restant compatibles avec un standard imposé, en particulier en conservant le protocole de communication prévu par ce standard.

Dans ce but, l'invention a pour objet un système comportant un émetteur de signaux fonctionnels tels que signaux de donnée, d'adresse, de contrôle ou d'horloge, un circuit d'alimentation, une pluralité d'unités adaptées à un protocole et à un bus de communication d'un premier type, ledit bus du premier type comportant notamment deux lignes d'alimentation prévues pour véhiculer des potentiels d'alimentation délivrés par ledit circuit d'alimentation et au moins une ligne fonctionnelle prévue pour véhiculer un desdits signaux fonctionnels délivrés par ledit émetteur de signaux fonctionnels, ledit système étant caractérisé en ce qu'il comporte au moins un bus de communication d'un second type défini par une modification du bus du premier type selon laquelle sont supprimées lesdites lignes d'alimentation et est ajoutée une ligne fonctionnelle complémentaire alimentée par un signal fonctionnel complémentaire dudit signal fonctionnel et en ce qu'au moins une des unités du système est reliée à un bus de communication du second type par l'intermédiaire d'un circuit d'adaptation comportant un régénérateur d'alimentation pour produire à partir dudit signal fonctionnel et dudit signal fonctionnel complémentaire des potentiels d'alimentation régénérés.

Comme en règle générale les niveaux haut et bas des signaux fonctionnels correspondent à des potentiels d'alimentation, l'invention peut s'appliquer à la plupart des bus standards existants sans qu'il soit nécessaire de modifier les niveaux du signal fonctionnel normalement disponible sur une des lignes du bus. Ainsi, selon une autre caractéristique de l'invention, le système comporte un circuit de conversion comprenant un amplificateur inverseur alimenté par lesdits potentiels d'alimentation, recevant en entrée ledit signal fonctionnel et fournissant en sortie ledit signal fonctionnel complémentaire.

Selon un aspect particulier de réalisation, le régénérateur d'alimentation comporte un circuit redresseur à double alternance recevant en entrée ledit signal fonctionnel et ledit signal fonctionnel complémentaire et fournissant en sortie lesdits potentiels d'alimentation régénérés.

Dans le cas où une amplification en courant ou en tension du signal fonctionnel s'avérerait nécessaire, on pourra prévoir selon une variante de réalisation de l'invention que le circuit de conversion comporte un amplificateur direct alimenté par les potentiels d'alimentation, recevant en entrée ledit signal fonctionnel et fournissant en sortie un signal fonctionnel amplifié, ce signal fonctionnel amplifié remplaçant le signal fonctionnel initial à l'entrée du circuit redresseur.

Selon encore une autre variante de réalisation de l'invention, le régénérateur d'alimentation est muni de moyens pour ajuster les niveaux des potentiels qu'il fournit. Cette dernière disposition pourra s'avérer utile ou nécessaire dans les cas où les niveaux des potentiels d'alimentation des amplificateurs utilisés pour fournir le signal fonctionnel complémentaire et/ou le signal fonctionnel amplifié sont trop différents des niveaux des potentiels d'alimentation et/ou du signal fonctionnel utilisables par l'unité.

L'invention trouve une application particulièrement avantageuse dans le cadre d'un système conforme aux standards I²C, en particulier lorsque la technologie MOS ou CMOS est utilisée. Le bus du second type obtenu conformément à l'invention ne comportant plus que trois lignes, il sera alors possible d'utiliser les connecteurs initialement prévus pour les composants discrets à trois bornes, tels que les transistors. On pourra par conséquent utiliser les outillages de packaging conventionnels développés depuis longtemps pour ce type de composant. Il en résultera une économie des coûts de fabrication due au faible prix des connecteurs et aux investissements d'outillage réduits.

Selon d'autres aspects de l'invention, au moins une unité et le circuit d'adaptation associé fait partie d'un même circuit intégré, cette unité pouvant être une mémoire programmable effaçable électriquement du type EEPROM.

L'invention concerne également l'application du système défini précédemment pour réaliser des systèmes utilisant des lecteurs de carte à microprocesseur.

D'autres aspects et détails de réalisation apparaîtront dans la suite de la description en référence aux figures.
- La figure 1 est un schéma d'ensemble d'un système conforme à l'invention ;
- la figure 2 représente un exemple de réalisation du circuit de conversion conforme à l'invention ;
- la figure 3 est une variante de réalisation du circuit de la figure 2 ;
- la figure 4 représente un exemple de réalisation d'un circuit d'adaptation selon l'invention ;
- la figure 5 est une variante de réalisation du circuit de la figure 4 ;
- la figure 6 représente un exemple de réalisation d'un redresseur à double alternance en technologie MOS ;
- la figure 7 représente des chronogrammes permettant d'expliquer le fonctionnement du circuit de la figure 6.

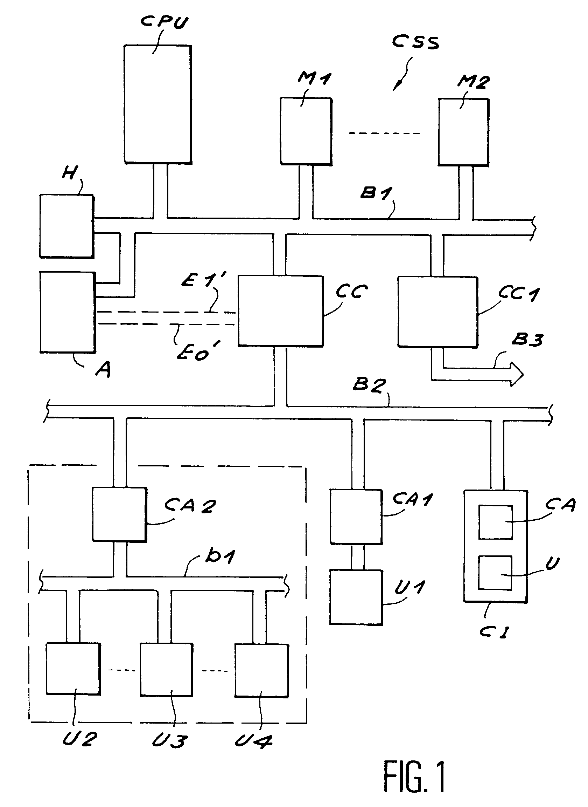

La figure 1 représente un exemple de système conforme à l'invention. Le système est supposé être piloté par un sous-système central CSS organisé autour d'un premier bus de communication B1 sur lequel sont reliés un microprocesseur CPU et des unités M1, M2 telles que mémoires vives, mémoires mortes, contrôleurs d'entrée-sortie ou interfaces de télécommunication. Selon l'exemple présenté, le système est du type synchrone, un générateur H de signaux d'horloge étant relié à certaines lignes spécialisées du bus B1. Enfin un circuit d'alimentation A relié à d'autres lignes spécialisées du bus B1 fournit les potentiels d'alimentation nécessaires aux divers circuits du système. Le processeur CPU et les unités M1, M2 communiquent entre eux par l'intermédiaire du bus B1 selon un protocole de communication prédéterminé. Le bus B1 est par exemple conforme au standard I²C qui définit à la fois l'affectation des lignes du bus et le protocole de communication.

Conformément à l'invention, le système comporte un second bus de communication B2 d'un second type et qui comporte un nombre de lignes inférieur à celui du bus B1. Les bus B1 et B2 sont reliés entre eux par l'intermédiaire d'un circuit de conversion CC. Le système pourra comprendre également d'autres bus B3 du second type reliés chacun au bus B1 par l'intermédiaire de circuits de conversion associés CC1.

Le système comporte également une pluralité d'unités U, U1, U2, U3, U4 dont les interfaces d'entrée et de sortie sont supposées conformes au standard défini par le bus B1. Ces unités U, U1-U4 sont reliées au second bus B2 par l'intermédiaire de circuits d'adaptation CA, CA1, CA2. Dans l'exemple représenté, certaines unités U2, U3, U4 sont reliées à un circuit d'adaptation commun CA2 par l'intermédiaire d'un troisième bus bl conforme au standard du bus B1. Toutes ces unités peuvent être réalisées sous la forme de circuits intégrés. On pourra utiliser avantageusement des circuits intégrés CI spécialement conçus pour incorporer l'unité U ainsi que le circuit d'adaptation CA associé.

Comme nous le verrons plus en détail ultérieurement, les circuits de conversion et d'adaptation sont prévus pour que le bus B2 comporte un nombre de lignes inférieur à celui du bus B1 tout en permettant d'utiliser des unités U, U1-U4 conformes au protocole de communication du bus B1. Cette réduction du nombre de lignes entraîne donc une réduction des coûts de câblage mais aussi de connectique dans le cas où des circuits intégrés spécifiques sont utilisés.

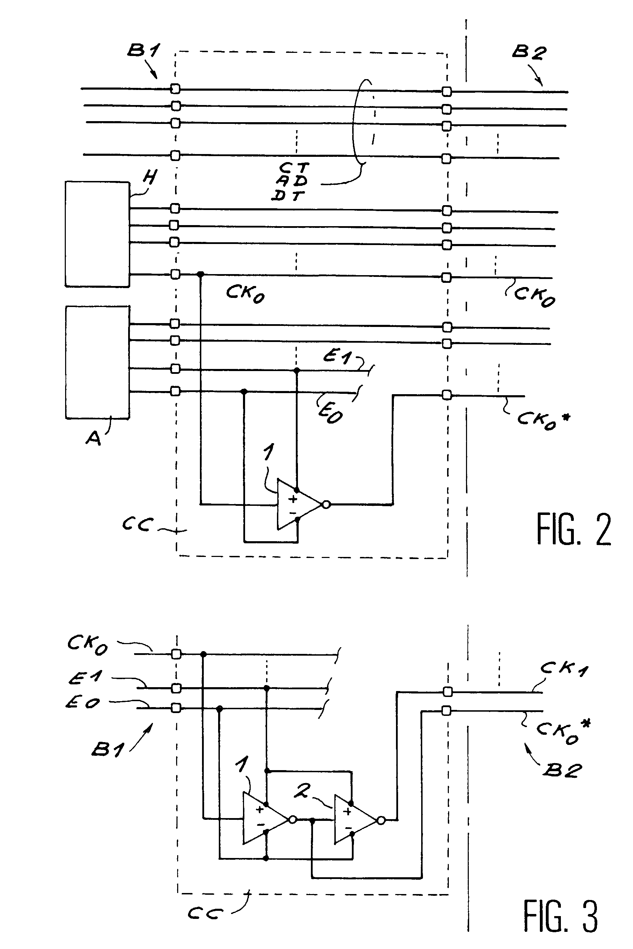

La figure 2 montre plus en détail un exemple de réalisation d'un circuit de conversion CC. Le bus B1 représenté schématiquement à gauche de la figure comporte un certain nombre de lignes fonctionnelles servant par exemple à transmettre des signaux de commande CT, d'adresse AD et de donnée DT ainsi que des signaux d'horloge tels que CK0. Dans le cas d'un bus I²C, les lignes CT, AD et DT se réduisent en une seule appelée SDA.

Un générateur H de signaux d'horloge fournit les signaux d'horloge servant à la synchronisation du système comme par exemple le signal CK0. Dans le cas du bus I²C, il n'est prévu qu'un seul signal d'horloge SCL.

Le bus B1 comporte enfin des lignes d'alimentation reliées à un circuit d'alimentation A fournissant les potentiels d'alimentation tels que E0 et E1 nécessaires aux circuits du système. Dans le cas d'un bus I²C, on prévoit seulement deux lignes Vss et Vcc affectées respectivement à la masse et à un potentiel de 5 volts.

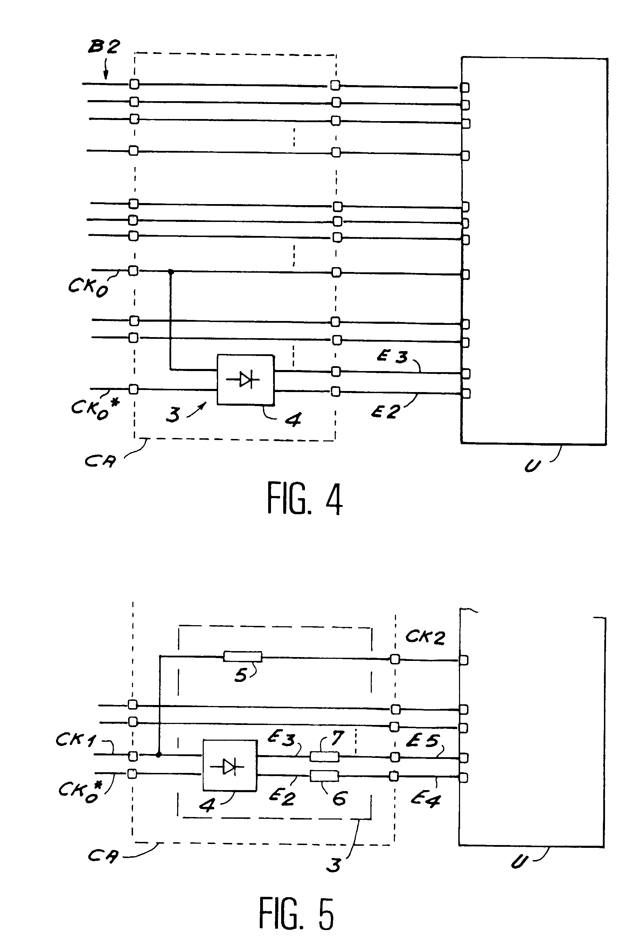

A titre d'exemple non limitatif, le signal fonctionnel choisi pour remplacer les potentiels d'alimentation est un des signaux d'horloge CK0. Bien entendu, on pourrait choisir également un autre signal fonctionnel à condition bien sûr qu'il s'agisse d'un signal monodirectionnel allant du bus B1 vers le bus B2. Conformément à l'invention, le circuit de conversion CC permet de transformer le bus B1 en un bus B2 ayant un nombre de lignes inférieur d'au moins une unité. Ainsi, selon l'exemple représenté, les lignes d'alimentation affectées au potentiel E0 et E1 sont supprimées, l'une d'entre elles étant remplacée par une ligne affectée au signal CK0* fournie par un amplificateur inverseur 1 du circuit de conversion CC. L'amplificateur inverseur 1 est alimenté par les potentiels E0 et E1 et reçoit en entrée le signal d'horloge CK0. Le signal CK0* constitue donc un signal complémentaire au sens logique du signal d'horloge CK0. Dans le cas habituel où le signal CK0 présente des niveaux bas et un niveau haut respectivement égaux aux deux potentiels E0 et E1, le signal d'horloge complémentaire CK0* possédera donc les mêmes niveaux bas et haut. Comme nous l'expliquerons en référence à la figure 4, les potentiels d'alimentation E0 et E1 absents du bus B2 pourront être régénérés facilement à partir des signaux CK0 et CK0*.

Dans les cas où l'on ne pourrait pas utiliser directement le signal CK0 pour régénérer les potentiels d'alimentation, on pourra adopter une variante de réalisation représentée à la figure 3. Selon cette variante, le signal CK0 est remplacé par un signal CK1 fourni par un amplificateur direct du signal CK0. Pour cela, il suffit de prévoir dans le circuit de conversion CC un second amplificateur inverseur 2 monté en cascade avec le premier amplificateur inverseur 1, ce second amplificateur inverseur 2 étant également alimenté par les potentiels E0 et E1. Le signal de sortie de l'amplificateur inverseur 2 est donc un signal d'horloge amplifié CK1, en phase avec le signal d'horloge CK0 et ses niveaux bas et haut seront donc imposés par les potentiels d'alimentation E0 et E1. Cette disposition permettra donc de diminuer la charge du générateur H, ce qui peut s'avérer utile si le générateur n'est pas dimensionné pour débiter un courant important comme ce pourrait être le cas pour certaines technologies ou si l'on prévoit de brancher un nombre important d'unités sur le bus B2. Cette disposition permet également de rendre indépendant les niveaux des signaux CK0* et CK1 de ceux du signal CK0. Il sera également possible de remplacer les potentiels E0 et E1 du bus B1 par d'autres potentiels E0' et E1' spécifiques issus du circuit d'alimentation A comme représenté schématiquement à la figure 1. En prévoyant par exemple des potentiels E0' et E1' respectivement inférieur et supérieur à E0 et E1, on pourra compenser les chutes de tension provoquées par le régénérateur d'alimentation CA.

La figure 4 représente un circuit d'adaptation CA adapté au circuit de conversion CC selon la figure 2. Le circuit d'adaptation CA est en grande partie constitué de simples interconnexions pour mettre en communication les lignes du bus B2 aux entrées correspondantes de l'unité U associée. En particulier, le signal d'horloge CK0 est directement transmis à l'entrée d'horloge correspondante de l'unité U. Le circuit CA comporte un régénérateur d'alimentation 3 qui se réduit dans l'exemple décrit à un simple circuit redresseur 4 recevant en entrée le signal d'horloge CK0 et le signal d'horloge complémentaire CK0*, les sorties du redresseur 4 fournissant les potentiels d'alimentation régénérés E2 et E3 qui sont ensuite appliqués aux entrées d'alimentation correspondantes de l'unité U.

Une variante de réalisation du circuit A est représentée à la figure 5. Cette variante est adaptée au circuit de conversion de la figure 3. Dans ce cas, le régénérateur d'alimentation 3 comporte également un circuit redresseur 4 qui reçoit en entrée le signal d'horloge complémentaire CK0* et le signal d'horloge amplifié CK1. L'entrée d'horloge de l'unité U prévue pour recevoir le signal d'horloge CK0 est reliée au signal d'horloge amplifié CK1, éventuellement par l'intermédiaire d'un élément 5 d'ajustement des niveaux. L'élément 5 est par exemple une résistance ou un montage à diodes destiné à limiter l'amplitude du signal CK1 dans le cas où les potentiels E0 et E1 seraient trop différents des niveaux bas et haut acceptables pour l'entrée d'horloge de l'unité U.

Pour la même raison, on pourra prévoir également des moyens tels que résistance ou diode 6, 7 pour atténuer les potentiels E2, E3 fournis par le redresseur 4, en particulier dans le cas où on utilise les potentiels auxiliaires E0' et E1' mentionnés précédemment.

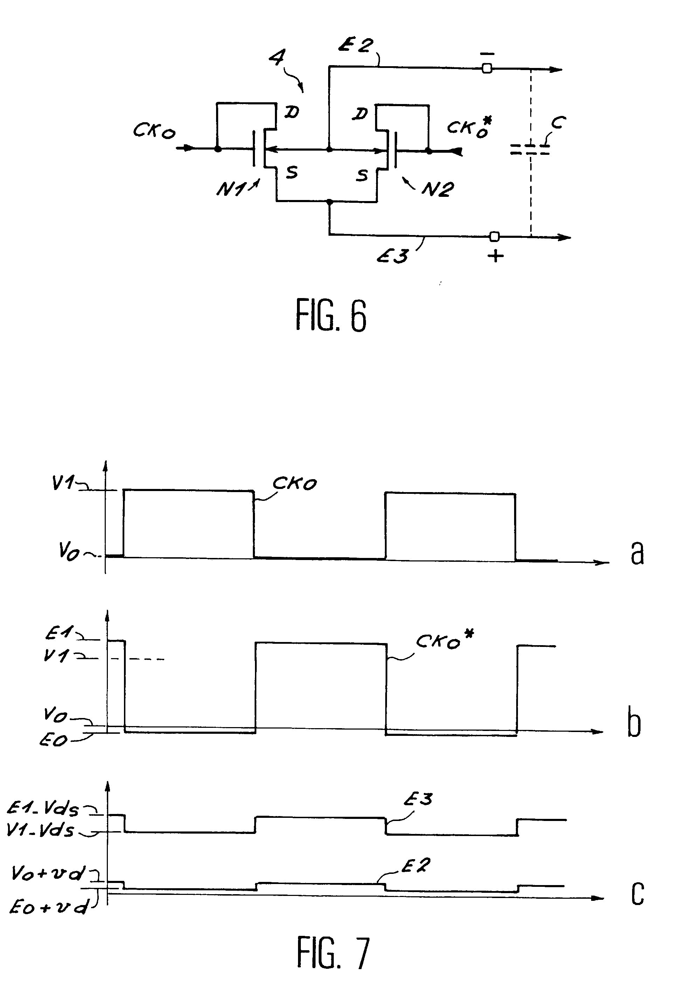

La figure 6 représente un exemple de réalisation en technologie MOS du circuit redresseur 4. Il est constitué de deux transistors MOS à canal n, N1, N2 ayant chacun leur drain relié à leur grille. Leurs sources sont reliées entre elles ainsi que leurs substrats. Les grilles des transistors N1 et N2 reçoivent respectivement le signal d'horloge CK0 et le signal d'horloge complémentaire CK0*. Les sources des transistors N1 et N2 constituent la borne positive du redresseur tandis que leurs substrats constituent la borne négative. En variante, le signal CK0 peut être remplacé par le signal amplifié CK1.

Le fonctionnement du circuit de la figure 6 peut être expliqué en référence aux chronogrammes de la figure 7. Le chonogramme (a) représente le signal CK0 ayant la forme de créneaux dont les niveaux bas et haut sont respectivement V0 et V1. Le chronogramme (b) représente le signal d'horloge complémentaire CK0*, dans le cas de la réalisation de la figure 3. Le signal CK0* varie alors entre les potentiels E0 et E1 supposés différents respectivement des niveaux V0 et V1. Bien entendu, on pourrait avoir aussi E0 = V0 et V1 = E1.

Le chronogramme (c) représente les potentiels E2 et E3 fournis par le redresseur. Comme on peut le constater sur la figure, le potentiel E2 est égal au plus faible des potentiels des signaux CK0 et CK0* auxquels s'ajoute la chute de tension vd de la jonction p-n entre le substrat et le canal des transistors. Le potentiel E3 est égal au plus grand des potentiels des signaux CK0 et CK0* auxquels il faut retirer la chute de tension Vds due à la résistance du canal des transistors. Par rapport à un pont redresseur à double alternance utilisant des diodes, le montage proposé présente donc l'avantage qu'une seule jonction p-n provoquant un seuil de tension de l'ordre de 0,6 volt se trouve en série avec la charge.

Les variations des signaux E2 et E3 à chaque alternance du signal d'horloge CK0 sont dues essentiellement au fait que les potentiels E0 et E1 sont respectivement différents de V0 et V1. Ce phénomène n'existe évidemment pas si ces potentiels sont respectivement égaux. En pratique, ces fluctuations n'ont que peu d'importance compte tenu de l'effet de filtrage dû à la capacité de structure C des circuits intégrés en technologie MOS.

Le chronogramme (c) permet de mettre en évidence l'intérêt d'utiliser les potentiels auxiliaires E0' et E1' si l'on veut pouvoir compenser facilement les chutes de tension Vds et vd.

L'invention ne se limite pas aux seuls exemples de réalisation qui viennent d'être décrits. Elle peut au contraire être adaptée à d'autres types de bus, en particulier ceux comportant plusieurs lignes d'alimentation permettant de réduire davantage le nombre de lignes du bus du second type.

## Revendications

1. Système comportant un émetteur (H) de signaux fonctionnels tels que signaux de donnée, d'adresse, de contrôle ou d'horloge, un circuit d'alimentation (A), une pluralité d'unités (M1, M2, U, U1-U4) adaptées à un protocole et à un bus de communication d'un premier type (B1), ledit bus du premier type (B1) comportant notamment deux lignes d'alimentation prévues pour véhiculer des potentiels d'alimentation (E0, E1) délivrés par ledit circuit d'alimentation (A) et au moins une ligne fonctionnelle prévue pour véhiculer un desdits signaux fonctionnels (CK0) délivrés par ledit émetteur (H) de signaux fonctionnels, ledit système étant caractérisé en ce qu'il comporte au moins un bus de communication d'un second type (B2, B3) défini par une modification du bus du premier type (B1) selon laquelle sont supprimées lesdites lignes d'alimentation et est ajoutée une ligne fonctionnelle complémentaire alimentée par un signal fonctionnel complémentaire (CK0*) dudit signal fonctionnel (CK0) et en ce qu'au moins une des unités (U, U1-U4) du système est reliée à un bus de communication du second type (B2) par l'intermédiaire d'un circuit d'adaptation (CA, CA1, CA2) comportant un régénérateur d'alimentation (3) pour produire à partir dudit signal fonctionnel (CK0) et dudit signal fonctionnel complémentaire (CK0*) des potentiels d'alimentation régénérés (E2, E3, E4, E5).

2. Système selon la revendication 1, caractérisé en ce qu'il comporte un circuit de conversion (CC) comprenant un amplificateur inverseur (1) alimenté par lesdits potentiels d'alimentation (E0, E1), recevant en entrée ledit signal fonctionnel (CK0) et fournissant en sortie ledit signal fonctionnel complémentaire (CK0*).

3. Système selon la revendication 2, caractérisé en que ledit régénérateur d'alimentation (3) comporte un circuit redresseur (4) à double alternance recevant en entrée ledit signal fonctionnel (CK0) et ledit signal fonctionnel complémentaire (CK0*) et fournissant en sortie lesdits potentiels d'alimentation régénérés (E2, E3).

4. Système selon la revendication 2, caractérisé en ce que ledit circuit de conversion (CC) comporte un amplificateur direct (1,2) alimenté par lesdits potentiels d'alimentation (E0, E1), recevant en entrée ledit signal fonctionnel (CK0) et fournissant en sortie un signal fonctionnel amplifié (CK1) et en ce que ledit régénérateur d'alimentation (3) comporte un circuit redresseur (4) à double alternance recevant en entrée ledit signal fonctionnel complémentaire (CK0*) et ledit signal fonctionnel amplifié (CK1).

5. Système selon l'une des revendications 1 à 4, caractérisé en ce que ledit régénérateur d'alimentation (3) est muni de moyens (5, 6, 7) pour ajuster les niveaux des potentiels qu'il fournit.

6. Système selon l'une des revendications 1 à 5, caractérisé en ce que ledit bus du premier type (B1) est conforme au standard I²C, ledit signal fonctionnel étant le signal d'horloge prévu par ledit standard.

7. Système selon l'une des revendications 1 à 6, caractérisé en ce qu'il comporte au moins un circuit intégré (CI) incorporant une desdites unités (U) ainsi que le circuit d'adaptation (CA) associé.

8. Système selon la revendication 7, caractérisé en ce que l'unité (U) contenue dans ledit circuit intégré (CI) est une mémoire programmable effaçable électriquement du type EEPROM.

9. Utilisation du système selon l'une des revendications 1 à 8 dans des systèmes utilisant des lecteurs de carte à microprocesseur.

## Patentansprüche

1. System mit einem Sender (H) für Funktionssignale, wie Daten-, Adreß-, Steuer- oder Taktsignale, einem Versorgungsschaltkreis (A), mehreren Einheiten (M1, M2, U, U1-U4), die an ein Protokoll angepaßt sind und an einen Kommunikationsbus von einem ersten Typ (B1) angeschlossen sind, wobei der Bus vom ersten Typ (B1) insbesondere zwei Versorgungsleitungen, die vorgesehen sind, um Versorgungspotentiale (E0, E1) zu übertragen, die durch den Versorgungsschaltkreis (A) erzeugt werden, und wenigstens eine Funktionsleitung, die für die Übertragung eines der Funktionssignale (CK0) vorgesehen ist, die durch den Sender (H) für Funktionssignale ausgegeben wird, umfaßt, wobei das System dadurch gekennzeichnet ist, daß es wenigstens einen Kommunikationsbus eines zweiten Typs (B2, B3) umfaßt, der definiert ist durch eine Modifikation des Busses vom ersten Typ (B1), nach der die Versorgungsleitungen unterdrückt sind und eine komplementäre Funktionsleitung hinzugefügt ist, die versorgt wird mit einem komplementären Funktionssignal (CK0*) des Funktionssignals (CK0), und dadurch, daß wenigstens eine der Einheiten (U, U1-U4) des Systems mit einem Kommunikationsbus vom zweiten Typ (B2) über einen Anpassungsschaltkreis (CA, CA1, CA2) verbunden ist, der einen Versorgungskonverter (3) zum Erzeugen aus dem Funktionssignal (CK0) und dem komplementären Funktionssignal (CK0*) von konvertierten Versorgungspotentialen (E2, E3, E4, E5) umfaßt.

2. System nach Anspruch 1, dadurch gekennzeichnet, daß es einen Konversionsschaltkreis (CC) umfaßt, der einen invertierenden Verstärker (1) umfaßt, versorgt durch die Versorgungspotentiale (E0, E1), der am Eingang das Funktionssignal (CK0) empfängt und am Ausgang das komplementäre Funktionssignal (CK0*) ausgibt.

3. System nach Anspruch 2, dadurch gekennzeichnet, daß der Versorgungskonverter (3) einen Doppelgleichrichterschaltkreis (4) umfaßt, der am Eingang das Funktionssignal (CK0) und das komplementäre Funktionssignal (CK0*) empfängt und am Ausgang die konvertierten Versorgungspotentiale (E2, E3) ausgibt.

4. System nach Anspruch 2, dadurch gekennzeichnet, daß der Konversionsschaltkreis (CC) einen Direktverstärker (1, 2) umfaßt, der durch die Versorgungspotentiale (E0, E1) versorgt wird, am Eingang das Funktionssignal (CK0) empfängt und am Ausgang ein verstärktes Funktionssignal (CK1) ausgibt, und dadurch, daß der Versorgungskonverter (3) einen Doppelgleichrichterschaltkreis (4) umfaßt, der am Eingang das komplementäre Funktionssignal (CK0*) und das verstärkte Funktionssignal (CK1) empfängt.

5. System nach einem der Ansprüche 1 bis 4, dadurch gekennzeichnet, daß der Versorgungskonverter (3) ausgestattet ist mit Mitteln (5, 6, 7) zum Anpassen der Niveaus der Potentiale, die er ausgibt.

6. System nach einem der Ansprüche 1 bis 5, dadurch gekennzeichnet, daß der Bus vom ersten Typ (B1) dem Standard I²C entspricht, wobei das Funktionssignal das Taktsignal ist, das in diesem Standard vorgesehen ist.

7. System nach einem der Ansprüche 1 bis 6, dadurch gekennzeichnet, daß es wenigstens einen integrierten Schaltkreis (CI) umfaßt, der eine der Einheiten (U) sowie den dazugehörigen Adaptionsschaltkreis (CA) beinhaltet.

8. System nach Anspruch 7, dadurch gekennzeichnet, daß die Einheit (U) in dem integrierten Schaltkreis (CI) ein elektrisch löschbarer und programmierbarer Speicher vom Typ EEPROM ist.

9. Verwendung des Systems nach einem der Ansprüche 1 bis 8 in Systemen, die Chipkartenlesegeräte benutzen.

## Claims

1. System including a sender (H) of functional signals such as data, address, control or clock signals, a power supply circuit (A), a plurality of units (M1, M2, U, U1-U4) adapted to a protocol and to a communication bus of a first type (B1), the said bus of the first type (B1) having notably two power supply lines provided for conveying supply potentials (E0, E1) delivered by the said power supply circuit (A) and at least one functional line provided for conveying one of the said functional signals (CK0) delivered by the said functional signal sender (H), the said system being characterised in that it includes at least one communication bus of a second type (B2, B3) defined by a modification of the bus of the first type (B1) according to which the said power supply lines are omitted and a complementary functional line supplied by a functional signal (CK0*) complementary to the said functional signal (CK0) is added, and in that at least one of the units (U, U1-U4) of the system is connected to a communication bus of the second type (B2) by means of an adapter circuit (CA, CA1, CA2) including a supply regenerator (3) for producing regenerated supply potentials (E2, E3, E4, E5) from the said functional signal (CK0) and from the said complementary functional signal (CK0*).

2. System according to Claim 1, characterised in that it includes a conversion circuit (CC) comprising an inverting amplifier (1) fed by the said supply potentials (E0, E1), receiving the said functional signal (CK0) as an input and supplying the said complementary functional signal (CK0*) as an output.

3. System according to Claim 2, characterised in that the said supply regenerator (3) includes a full-wave rectifier circuit (4) receiving the said functional signal (CK0) and the said complementary functional signal (CK0*) as an input and supplying the said regenerated supply potentials (E2, E3) as an output.

4. System according to Claim 2, characterised in that the said conversion circuit (CC) includes a direct amplifier (1, 2) fed by the said supply potentials (E0, E1), receiving the said functional signal (CK0) as an input and supplying an amplified functional signal (CK1) as an output, and in that the said supply regenerator (3) includes a full-wave rectifier circuit (4) receiving the said complementary functional signal (CK0*) and the said amplified functional signal (CK1) as an input.

5. System according to one of Claims 1 to 4, characterised in that the said supply regenerator (3) is provided with means (5, 6, 7) for adjusting the levels of the potentials which it supplies.

6. System according to one of Claims 1 to 5, characterised in that the said bus of the first type (B1) is in accordance with the I²C standard, the said functional signal being the clock signal provided for by the said standard.

7. System according to one of Claims 1 to 6, characterised in that it includes at least one integrated circuit (CI) incorporating one of the said units (U) as well as the associated adapter circuit (CA).

8. System according to Claim 7, characterised in that the unit (U) contained in the said integrated circuit (CI) is an electrically erasable programable memory of the EEPROM type.

9. Use of the system according to one of Claims 1 to 8 in systems using microprocessor card readers.
